# EUROPEAN PATENT APPLICATION

(11) **EP 1 600 973 A1**
(43) Date of publication of application: **30.11.2005**
(21) Application number: 05253253.8
(22) Date of filing: 26.05.2005
(51) Int. Cl.: G11B 27/28, G06F 17/30

(54) **Moving image processing apparatus and method**

(30) Priority: 26.05.2004 JP 2004156809
(71) Applicant: KABUSHIKI KAISHA TOSHIBA, Tokyo 105-8001 (JP)
(72) Inventor: Aoki, Hisashi c/o Intellectual Prop. Div., Tokyo (JP)
(74) Representative: Granleese, Rhian Jane

(57) **Abstract**

A moving image processing apparatus (10) capable of discriminating program main parts and commercials with higher accuracy is provided. The apparatus includes a similar shot detecting unit (104) for measuring degrees of similarity between partial moving images and specifying similar partial moving images, meta shot boundary candidate time input means (109) for externally receiving input of times within the moving image that can be boundary candidates of the meta shots, a temporary meta shot attribute assigning unit (105) for assigning the same attributes to temporary meta shots containing partial moving images grouped and belonging to the same groups of meta shots divided according to meta shot boundary candidate times input by the meta shot boundary candidate time input unit (109), and a meta shot generating unit (107) for defining meta shots by coupling plural temporary meta shots temporally continuing and having the same attributes based on the assigned attributes or, when temporary meta shots having the same attributes do not continue, defining temporary meta shots themselves as meta shots.

## Description

### CROSS-REFERENCE TO RELATED APPLICATIONS

This application is based upon and claims the benefit of priority from the prior Japanese Patent Application No. 2004-156809, filed on 26, May, 2004; the entire contents of which are incorporated herein by reference.

### TECHNICAL FIELD

The present invention relates to a moving image processing apparatus, a moving image processing method, and a moving image processing program for generating a meta shot including plural partial moving images as moving images divided at image change points where contents of a moving image are changed over.

### BACKGROUND OF THE INVENTION

with the widespread use of high-performance personal computers (PCs) and hard disk recorders, technologies of digitizing and storing video and moving images have been developed. The technologies have been realized in the form of hardware and software, not only for commercial use but also for home use.

Specifically, for example, video is electromagnetically recorded within a PC or a hard disk (HDD) within a recorder. Accordingly, there are merits, which can not been obtained in the conventional video tapes, such that reproduction of a target program can be started with reduced waiting time, limited deletion of unwanted programs is easy, or the like. Such improvements in convenience make operation such as recording easier.

On the other hand, when a large amount of video is recorded, a problem that it becomes difficult to retrieve a desired scene arises. Such a problem can be dealt with by so-called "skipping over" programs using the fast forwarding function to shorten the retrieval time.

However, since such "skipping over" is for skipping display frames in physical units regardless of structures of program contents, for example, one frame per several seconds, a new problem that a scene of interest is passed over arises.

In order to solve such a problem, technical research and product development of dividing a moving image into partial moving images at image change points (hereinafter, referred to as "cut points") where images in the moving image are changed over for enabling skipping over with respect to each partial moving image (hereinafter, referred to as "shot") have been made using image processing technologies.

Many of the shots generated as described above have time lengths for reproduction as short as several seconds. In the case where one shot has that extremely short time length, no effect that retrieval time can be shorten is expected.'

In order to solve this problem, proposals of techniques of automatically discriminating commercials in the program and other parts than commercials (hereinafter, referred to as "program main parts") to provide attributes or automatically defining boundaries for easy description by users and product developments have been made already (e.g., see Japanese Patent Application Publications No. Hei-3-177175, Hei-3-184483, and Hei-8-317342).

These are, when recording a broadcasted program, for utilizing sound mode switching among stereophonic broadcasting, sound multiplex broadcasting, monaural broadcasting, etc. to automatically discriminate the stereophonic parts as commercials, for utilizing presence of silent parts for constant time lengths at start and end parts of the commercials to use and present the silent parts as boundaries between commercials or commercials and program main parts, or for utilizing the lengths of commercials of multiples of 15 seconds or the like to use and present combinations of cut points of multiples of N seconds as boundaries between commercials or a commercial and a program main part. Thereby, it becomes easier for users to selectively watching the program main parts or commercials.

According to the method in the above described documents, there are problems that boundaries can not be found when the program main parts and commercials are broadcasted in the same sound mode (e.g., stereophonic mode), unwanted boundaries are defined when the silent parts exist in the program main parts, and; when cuts exit at intervals of multiples of 15 seconds in the program main parts, the sections are erroneously determined as commercials.

The invention has been achieved in view of the above described problems and an object thereof is to provide a moving image processing apparatus and method capable of discriminating program main parts and commercials with higher accuracy.

### BRIEF SUMMARY OF THE INVENTION

According to one embodiment of the invention, in a moving image processing apparatus for classifying meta shots as sets of single partial moving images or plural partial moving images divided at image change points where contents of a moving image are changed over into meta shots having the same attributes, the moving image processing apparatus includes: a degree of similarity measurement processing unit for measuring degrees of similarity between plural partial moving images divided at image change points where contents of a moving image are changed over; a similar shot specification processing unit for specifying partial moving images similar to each other based on the measured degrees of similarity; a grouping processing unit for assigning the same group attributes to the specified similar partial moving images; a meta shot boundary candidate time input processing unit for externally receiving input of times within the moving image that can be boundary candidates of the meta shots and dividing the moving image into temporary meta shots as plural sections by the received meta shot boundary candidate times; and a temporary meta shot attribute assignment processing unit for assigning the same attributes to the divided temporary meta shots containing partial moving images to which the same group attributes have been assigned.

Since the moving image processing apparatus according to the invention assigns to program main part sections and commercial (temporary meta shot) sections temporally defined by the method of the above described patent documents or the like attributes representing to which of the program main parts and commercials the sections belong using appearance tendency of similar shots, the effect that program main part sections and commercials can be discriminated with higher accuracy than that by the conventional method.

### BRIEF DESCRIPTION OF THE DRAWINGS

Fig. 1 is a block diagram showing a functional configuration of a moving image processing apparatus of the invention according to the embodiment 1.
Fig. 2 is a schematic diagram for explanation of the operation of the moving image processing apparatus of the invention according to the embodiment 1.
Fig. 3 is a schematic diagram for explanation of the operation of the moving image processing apparatus of the invention according to the embodiment 1.
Fig. 4 is a flowchart showing moving image processing in the moving image processing apparatus of the invention according to the embodiment 1.
Fig. 5 shows a hardware configuration of the moving image processing apparatus of the invention according to the embodiment 1.
Fig. 6 is a block diagram showing a functional configuration of a moving image processing apparatus of the invention according to the embodiment 2.
Fig. 7 is a schematic diagram for explanation of the operation of the moving image processing apparatus of the invention according to the embodiment 2.
Fig. 8 is a schematic diagram for explanation of the operation of the moving image processing apparatus of the invention according to the embodiment 2.
Fig. 9 is a flowchart showing moving image processing in the moving image processing apparatus of the invention according to the embodiment 2.
Fig. 10 is a schematic diagram for explanation of the operation of the moving image processing apparatus of the invention according to the embodiment 3.

### DETAILED DESCRIPTION OF THE INVENTION

Hereinafter, embodiments of a moving image processing apparatus, a moving image processing method, and a moving image processing program according to the invention will be described in detail according to the drawings.

In the embodiments, as a generic term of a set of temporally continuing shots (or a single shot), the term "meta shot" is used. Further, sections of a moving image divided by externally input meta shot boundary candidates (time information) are referred to as "temporary meta shots".

Further, in the embodiments, not only so-called "commercials" broadcasted by commercial broadcasters but also meta shots less than one minute having no direct relation with program main parts such as previews of programs or notices of campaigns broadcasted by public broadcasters, pay-TV broadcasters, or the like are included in the definition of the term "commercials".

Furthermore, in the embodiments as below, as an example, processing in the case of assigning either of "non-commercial (i.e., program main part)" or "commercial (i.e., not program main part)" as attributes of meta shots will be described.

### [Embodiment 1]

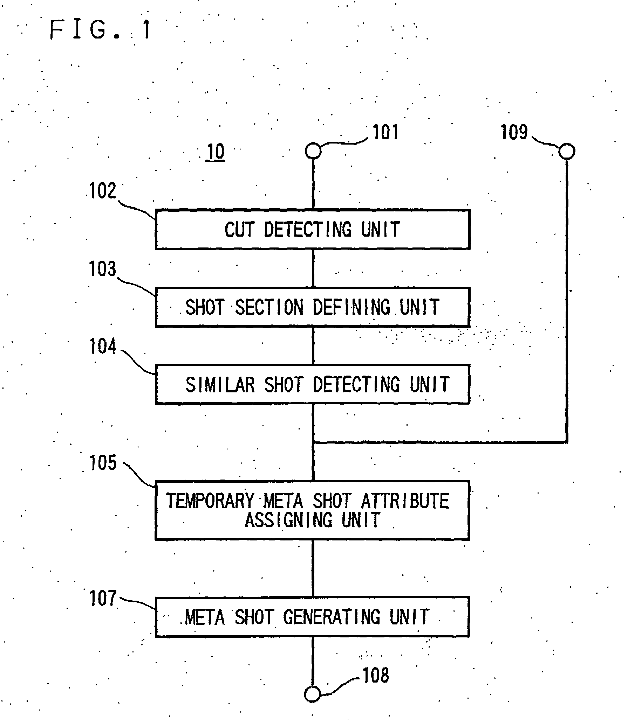

Fig. 1 is a block diagram showing a functional configuration of a moving image processing apparatus 10 according to the embodiment 1.

The moving image processing apparatus 10 includes a moving image acquiring unit 101, a cut detecting unit 102, a shot section defining unit 103, a similar shot detecting unit 104, a temporary meta shot attribute assigning unit 105, a meta shot generating unit 107, a meta shot information output unit 108, and a meta shot boundary candidate time input unit 109.

### (1) Moving image acquiring unit 101

The moving image acquiring unit 101 acquires moving images from outside via a broadcast program receiver (tuner) connected to the moving image processing apparatus 10 of interest, for example.

The moving image acquiring unit 101 may acquire uncompressed moving images. Further, it may acquire moving images that have been converted into digital data of Dv format or MPEG-1,2,4 as a standard format of moving image compression.

The moving image acquiring unit 101 converts the acquired moving images into suitable formats for processing by the cut detecting unit 102 and passes the converted moving images to the cut detecting unit 102. Here, the conversion into suitable formats is processing of decompressing (decoding) the compressed (encoded) moving images, for example. Further, the conversion may be processing of converting the size of the moving images into image sizes necessary and sufficient in the processing by the cut detecting unit 102.

### (2) Cut detecting unit 102

The cut detecting unit 102 calculates, with respect to image frames input one by one, the degree of similarity to an image frame input immediately before the image of interest, and detects an image change point where contents of images are changed over, i.e., a cut point. Further, when moving images using predictive coding for image compression as in MPEG-2 are acquired, cut points may be detected using variations in amounts of predictive coding.

By the way, the method for detecting cut points by the cut detecting unit 102 is not limited to that in the embodiment, and the method may be realized by various techniques that have been already known. Such a technique is described in the patent document 4 (Japanese Patent Application Publication No. Hei-9-93588) filed by the applicant of this application or the' like.

### (3) Shot section defining unit 103

The shot section defining unit 103 defines a set of image frames belonging to a time section and surrounded by two cut points aligned in positions temporally closest, which have been detected by the cut detecting unit 102, as "shot". For example, when a cut point is detected immediately before 3'15"20 frame of reproduction time and the next cut point is detected immediately before 3'21"12 frame, the frames from 3'15"20 frame to 3'21"11 frame is defined as one shot. Here, the reproduction time is time, when video is reproduced, required after the video is started and before a predetermined frame is reproduced.

### (4) similar shot detecting unit 104

The similar shot detecting unit 104 detects similar shots with the shot defined by the shot section defining unit 103 as a unit. Specifically, it selects one or two or more framed contained in a shot from respective shots as targets. Then, it measures degrees of similarity by comparing these frames.

Regarding similarity comparison between shots themselves, the method described in the patent document 5 (Japanese Patent Application Publication No. Hei-9-270006) filed by the applicant of this application or the like can be used. According to the method, feature amounts are calculated in two frames as targets, respectively. Then, the distance between these two feature amounts is calculated. For example, in the case where feature amounts using angle histograms are utilized, the distance between two feature amount points in 36-dimensional space is calculated. This distance is a value corresponding to the degree of similarity, and the smaller the distance value, the higher the degree of similarity.

The method of similarity comparison between shots can be realized not only by the method cited in the above described patent document 5 but also by extracting face regions from two frames as targets, respectively, and comparing the degrees of similarity between images of the extracted face regions.

Further, the method can be realized by extracting face regions from two frames as targets in the same way as above, identifying persons from the images within the extracted face regions, and determining similarity on the ground as to whether the identified persons are the same in the two frames or not.

According to these methods, two shots, which can not be determined as similar shots by the above described method because camera angles and shooting locations are different, can be determined as similar shots on the ground that "the shots in which the same person appears".

By the way, an example of the similarity comparison method between shots has been described as above, and similarity comparison methods that can be utilized in the moving image processing apparatus 10 of the invention are not limited to the examples described above.

In the case where thus measured degree of similarity is equal to or more than a predetermined value, these two shots are detected as shots similar to each other. Thus, similar shots are determined based on the degrees of similarity between shots.

The similar shot detecting unit 104 measures, with respect to one shot contained in one moving image, degrees of similarity to all other shots contained in the moving image of interest, however, as another example, degrees of similarity may be measured with respect to one shot by limiting a predetermined number of shots temporally close to the shot of interest.

### (5) Meta shot boundary candidate time input unit 109

On the other hand, the meta shot boundary candidate time input unit 109 externally inputs time information of boundaries between meta shots (as an example, a boundary between a continuous shot group of commercials and a continuous shot group of non-commercials) in the moving image of interest.

The time information provided from outside is assumed to be generated by the following methods, for example. The first to third generation examples have already been technically proposed or realized in the patent documents described in "TECHNICAL FIELD" of the specification and products that have been already released.

### (5-1) First generation example of time information

The first generation example is times at which sound signal modes (stereophonic broadcasting, sound multiplex broadcasting = bilingual broadcasting, monaural broadcasting, etc.) superimposed on airwave are changed over. This has been realized as a commercial detection function of analog video tape recorders.

### (5-2) Second generation example of time information

The second generation example is, when sound signals contained in a moving image are observed, the case where the sound level (square of waveform data) over a fixed period (e.g., 0.5 seconds or the like) is equal to or less than a fixed value is referred to as "silent section", arbitrary times such as start time, end time, or intermediate time of the silent section. This has been also realized as a silent part automatic division function in analog video tape recorders.

### (5-3) Third generation example of time information

The third generation example is a method, as a result of cut detection by the above described method utilizing that commercials normally have specific time lengths such as 15 seconds, 30 seconds, or 60 seconds, of searching for combinations in which cut points become multiples of 15 seconds, and, when such combinations are found, defining them as boundaries of commercials and program main parts and the temporally shorter time sections surrounded by the combinations as commercials in terms of meta shot.

### (5-4) Fourth generation example of time information

As the fourth generation example, the case where the transmission systems are different between commercials and program main parts can be assumed in the case of digital broadcasting using MPEG-2.

For example, in the case of a program showing a movie or the like, the original movie is produced on film having 24 frames per second, however, this is encoded by "3-2 pull down" method in order to convert it into 30 frames (60 fields) as a system for TV broadcasting. By observing the presence or absence of the "3-2 pull down" in the MPEG-2 video stream data, boundaries between the commercial parts that have not been subjected to "3-2 pull down" and the program main parts (movie) are defined.

### (5-5) Fifth generation example of time information

In the fifth generation example, it is possible to switch resolutions or the like in midstream of the program or between program main parts and commercials under the standards. That is, it is possible that the commercial parts are high-definition broadcasted and the program main parts are broadcasted with normal TV resolution, or vise versa. Accordingly, these change points of resolutions or the like may be used as meta shot boundary candidates.

### (5-6) Sixth generation example of time information

In the sixth generation example, a user of the moving image processing apparatus 10, a broadcaster, or a third party other than those may manually input boundaries between commercials and program main parts. In this case, for example, the operator may push a button when he or she feels the boundaries between commercials and program main parts while watching the TV screen, and input the timing as meta shot boundary candidate times in the moving image processing apparatus 10.

### (5-7) Example of temporary meta shot

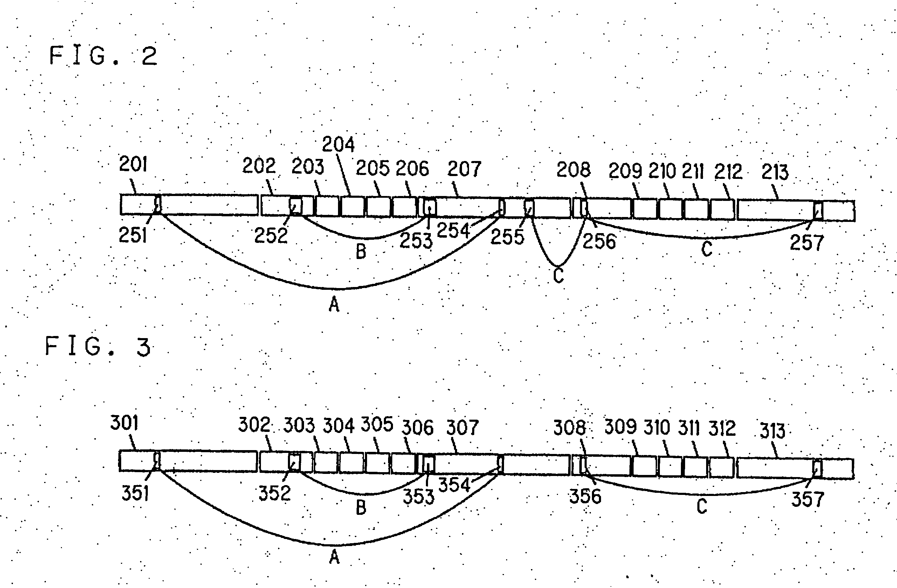

Fig. 2 shows an example in which the moving images input to the moving image acquiring unit 101 are divided into temporary meta shots based on the meta shot boundary candidate times as described above. Fig. 2 is a conceptual diagram for explanation of the operation of the moving image processing apparatus 10 according to the embodiment 1.

The temporary meta shots 201 to 213 represent definition of temporary meta shots input from the meta shot boundary candidate time input unit 109 as described above. In Fig. 2, the time flows from left to right, and the leftward direction is the leading direction of the program and the rightward direction is the end direction of the program. In the example of Fig. 2, it is assumed that temporary meta shots are defined' by silence detection.

All of the temporary meta shots 203 to 206 and 209 to 212 are 30-second commercials, however, in this stage, the moving image processing apparatus 10 has not determined whether the temporary meta shots are commercials or not. The determination whether the temporary meta shots are commercials or not is performed by the method described as below.

In Fig. 2, 251 to 257 represent some shots in the temporary meta shots; and the shot 251 and shot 254, the shot 252 and shot 253, the shot 255 and shot 256 are determined as similar shots in the similar shot detecting unit 104, and the same group attributes are assigned to them, respectively. That is, shot pattern "A" is assigned to the shot 251 and shot 254, shot pattern "B" to the shot 252 and shot 253, and shot pattern "C" to the shot 256 and shot 257, for example.

### (6) Temporary meta shot attribute assigning unit 105

The temporary meta shot attribute assigning unit 105 assigns attributes to temporary meta shots using the group attributes of the similar shots.

That is, first, an attribute of meta shot pattern "a" is assigned to the temporary meta shots 201 and 207 containing shots belonging to the shot pattern "A".

Then, the same attribute is tried to be assigned to the temporary meta shots 202 and 207 containing shots belonging to the shot pattern "B", however, because the meta shot pattern "a" has been already assigned to the temporary meta shot 207, accordingly, the attribution of "a" is also assigned to the temporary meta shot 202.

Then, the same attribute is tried to be assigned to the temporary meta shots 207, 208, and 213 containing shots belonging to the shot pattern "C", however, because the meta shot pattern "a" has been already assigned to the temporary meta shot 207, accordingly, the attribution of "a" is also assigned to the temporary meta shots 208 and 213.

Thus, in the example shown in Fig. 2, the same meta shot pattern "a" is assigned to the temporary meta shots 201, 202, 207, 208, and 213.

### (7) Meta shot generating unit 107

The meta shot generating unit 107 defines meta shots by coupling the temporary meta shots temporally continuing with the same attributes assigned as described above by the temporary meta shot attribute assigning unit 105. That is, the temporary meta shots 201 and 202, 207 and 208 are coupled as sections in which the same meta.shot pattern "a" continues.

On the other hand, regarding the temporary meta shots 203 to 206, 209 to 212 to which no attribute has been assigned, they may be not coupled as separate meta shots, or coupled. Here, assuming that they are coupled with "no attribute" as one attribute, the final meta shots are 201 and 202 (attribute a), 203 to 206 (no attribute), 207 and 208 (attribute a), 209 to 212 (no attribute), and 213 (attribute a).'

### (8) Meta shot information output unit 108

The meta shot information output unit 108 outputs information on thus defined meta shots.

Although the program main part is divided only by silence detection, by determining the meta shots defined with some attributes as program main parts and other parts as commercials, not only that the divided program main part can be reintegrated, but also that attribute assignment for discriminating commercials and program main parts is realized.

### (9) Modified example of attribute assignment

As above, the example in which the same attribute is assigned to all program main parts has been described, however, it is not necessarily the essential requirement for program main parts that they have the same attribute.

For example, in the case in Fig. 3, although the meta shot pattern "a" is assigned to the temporary meta shots 301, 302, and 307, and "b" is assigned to the temporary meta shots 308 and 313, however, as described in the previous paragraph and before that, by integrating meta shots defined with some attribute, meta shot integration and attribute assignment for discriminating program main parts and commercials can be performed in the same manner as described above.

In this case, naturally, meta shots can be defined without coupling the meta shot patterns "a" and "b".

### (10) Details on moving image processing

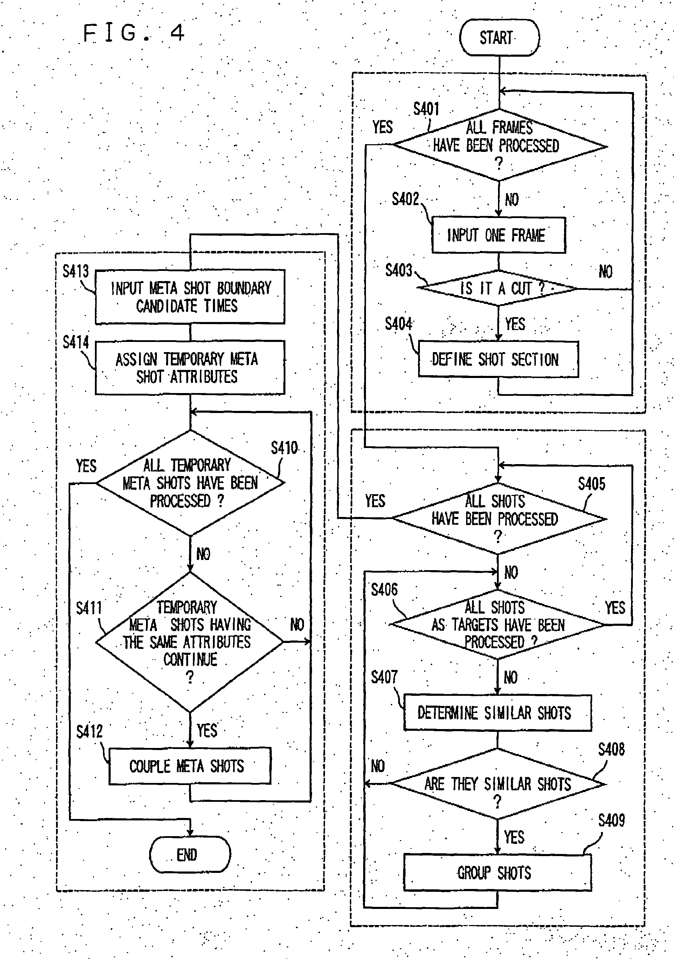

Fig. 4 is a flowchart showing moving image processing in the moving image processing apparatus 10.

The moving image processing principally includes three processings of shot section definition processing, grouping processing, and meta shot generation processing.

### (10-1) Shot section definition processing

First, the shot section definition processing is performed.

That is, the cut detecting unit 102 acquires image frames one by one and inputs them (step S402).

Then, the cut detecting unit 102 calculates degrees of similarity between the image frames acquired immediately before the image frames acquired at step S402 and the image frames acquired at step S402, and detects cut points based on the degrees of similarity.

In the case where the acquired image frames are cut points, (step S403, Yes), the shot section defining unit 103 defines the section from the cut point of interest to the cut point immediately before as a shot section (step S404).

The processing from step S402 to step S404 is repeated. The shot section definition with respect to entire video (program) is completed (step S401, Yes), the shot section definition processing is completed, and the process moves to the grouping processing.

### (10-2) Grouping processing

The similar shot detecting unit 104 selects a predetermined shot as a reference shot and determines the degree of similarity between the shot of interest and a target shot to be compared (step S407).

Then, when the target shot is judged to be similar to the reference shot (step S408, Yes), the similar shot detecting unit 104 assigns labels for identifying the same group to the target shot of interest and the reference shot. That is, the target shot and the reference shot are grouped (step S409).

The above described processing at step S407 and S408 is repeated with respect to all target shots to the one reference shot. The processing is completed with respect to all target shots (step S406, Yes), the reference shot is replaced and the processing at step S407 and S408 is repeated again.

Then, when the degree of similarity determination processing between reference shots and target shots is completed with respect to entire video (step S405, Yes), the grouping processing is completed, and the process moves to the next meta shot generation processing.

### (10-3) Meta shot generation processing

The meta shot boundary candidate time input unit 109 externally inputs time information as boundary candidates of meta shots (step S413). "Temporary meta shots" are sections formed by dividing the moving image input to the moving image acquiring unit 101 at boundaries of times input here.

Then, the temporary meta shot attribute assigning unit 105 assigns the same attribute labels to the plural temporary meta shots in which similar shots having the same labels exist based on the labels (attributes) assigned by the similar shot detecting unit 104 (step S414).

Then, the meta shot generating unit 107 couples the temporary meta shots using the attribute labels assigned to the temporary meta shots as described above with reference to whether they are continuous temporary meta shots and have the same attribute labels (or whether they have attribute labels or not) (step S411) to form meta shots (S412).

The above step S411 and step S412 are repeated. When the generation of meta shots is completed with respect to the entire video (step S410, Yes), the meta shot generation processing is completed, results are output from the meta shot information output unit 108, and the moving image processing is completed.

As described above, since the moving image processing apparatus 10 according to the embodiment 1 couples temporary meta shots based on appearance patterns of similar shots, the temporary meta shots excessively detected can be efficiently coupled. Further, as attributes of meta shots, whether they contain similar shots (they are programmain parts) or not (they are commercials) or the like can be automatically estimated. Thereby, the retrieval of predetermined scenes can be made easier for users.

### (11) Modified example of moving image processing

The moving image processing in the moving image processing apparatus 10 is formed by three processings (parts surrounded by broken lines in Fig. 4) of (1) shot section definition processing, (2) grouping processing, and (3) meta shot generation processing. In the embodiment, after (1) shot section definition processing is completed with respect to all shots contained in the moving image, the process moves to (2) grouping processing. Similarly, after (2) grouping processing is completed with respect to all shots contained in the moving image, the process moves to (3) meta shot generation processing. Instead, as another example, the above three processings may be executed in parallel while inputting video by providing a temporary storage area (not shown) in the moving image processing apparatus 10.

For example, each time a new cut is detected and a shot section is defined, similar shot determination may be performed with respect to the shot section and a shot section of the past, and meta shot generation for the moment may be performed based on the similar shot determination results that have been obtained and the meta shot boundary candidate time information externally input. Thus, by executing processings in parallel, processing result can be obtained in extremely short time after the program recording is ended.

### (12) Hardware configuration of moving image processing apparatus 10

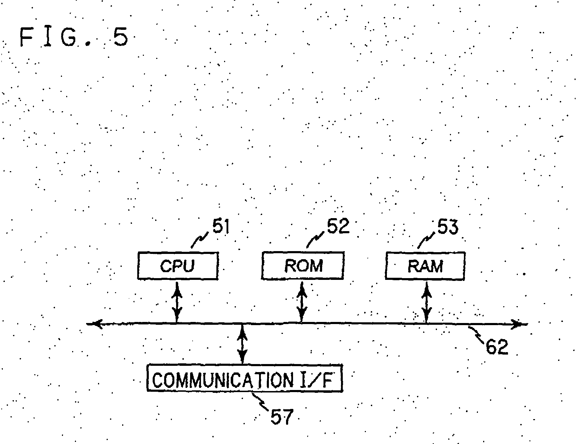

Fig. 5 shows a hardware configuration of the moving image processing apparatus 10 of the embodiment.

The moving image processing apparatus 10 includes as the hardware configuration a ROM 52 in which programs for executing the moving image processing or the like in the moving image processing apparatus 10 have been stored, a CPU 51 for controlling the respective units of the moving image processing apparatus 10 according to the programs within the ROM 52 to execute the moving image processing or the like, a RAM 53 in which a work area has been formed and various data required for control of the moving image processing apparatus 10 have been stored, a communication I/F 57 connecting to a network to perform communication, and a bus 62 for connecting the respective parts.

The moving image processing program for executing the moving image processing in the moving image processing apparatus 10 is provided by being recorded in a computer-readable recording medium such as a CD-ROM, flexible disk (FD), and DVD in files of an installable format or executable format.

Further, the moving image processing program of the embodiment may be arranged to be provided by being stored in a computer connected to a network such as Internet, and downloaded via the network.

In this case, the moving image processing program is loaded on a main storage by being read from the above recoding medium and executed in the moving image processing apparatus 10, and the respective parts that have been described in the software configuration are generated on the main storage.

### [Embodiment 2]

Next, the moving image processing apparatus 10 according to the embodiment 2 will be described.

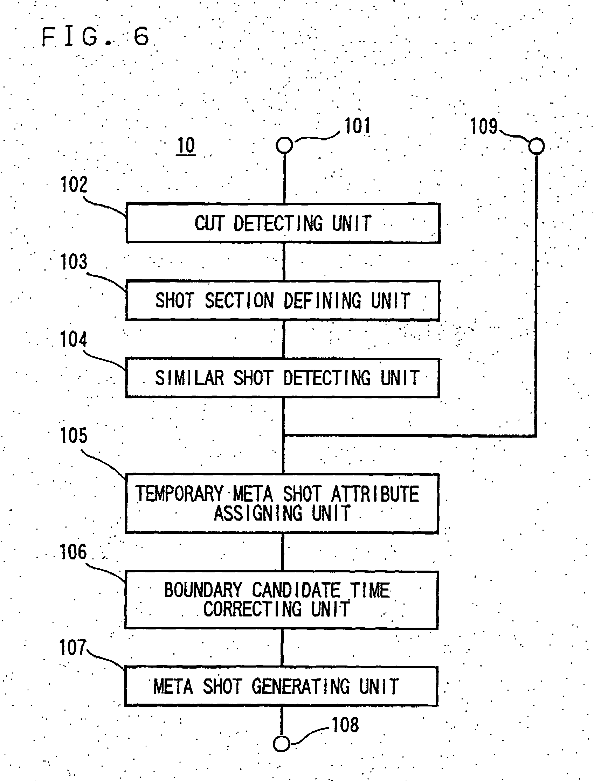

Fig. 6 is a block diagram showing a functional configuration of a moving image processing apparatus 10 according to the embodiment 2.

The embodiment 2 includes a boundary candidate time correcting unit 106 added to the above described embodiment 1, and other than that is the same as the embodiment 1 and Fig. 1. Accordingly, the description of the common parts with the embodiment 1 will be omitted as below, and only the part expanded from the embodiment 1 will be described.

The process to the point where the meta shot labels (attributes) are assigned by the temporary meta shot attribute assigning unit 105 utilizing meta shots containing shots belonging to the same similar shot groups is the same as in the embodiment 1.

### (1) Possibility of occurrence of mismatch between boundaries of temporary meta shots and units of shots

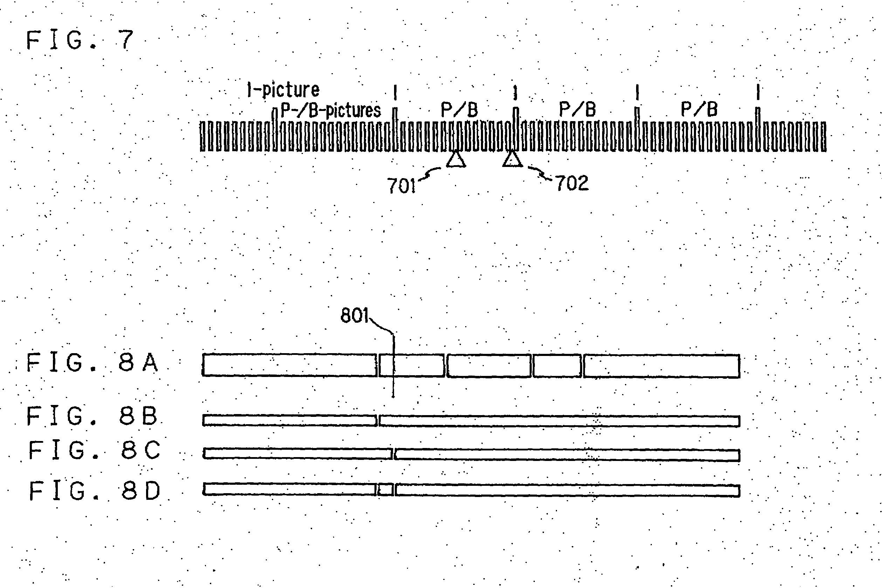

The possibility that boundaries of temporary meta shots defined by times input from the meta shot boundary candidate time input unit 109 and units of shots used for similar shot detection by the similar shot detecting unit 104 are different will be described using Figs. 7 and 8.

Fig. 7 is a conceptual diagram for showing the action of the boundary candidate time correcting unit 106 in the moving image processing apparatus 10. In Fig. 7, moving image data of MPEG-2 format is expressed in units of frames as an example. The vertically long rectangle represents one frame, and time passes from left to right.

The cut detection by the cut detecting unit 102 is sometimes performed using only frames called "I-pictures" having larger heights. This is because the amount of calculation can be reduced by performing the cut detection and similar shot detection on limited I-pictures.

In the case where the cut detecting unit 102 thus performs cut detection with respect to each I-picture, the shot definition performed by the shot section defining unit 103 and the similar shot detection performed by the similar shot detecting unit 104 are naturally at intervals of I-pictures. 702 in Fig. 7 is a cut point defined by the cut detecting unit 102 in this case, that is, a boundary between shots before and after.

On the other hand, the times input from the meta shot boundary candidate time input unit 109 can take arbitrary times. 701 in Fig. 7 is thus input meta shot boundary candidate time, however, this does not necessarily match the cut point 702 defined by the cut detecting unit 102.

Such a mismatch example can occur, for example, when the boundary between meta shots input from the meta shot boundary candidate time input unit 109 is detected by silence detection. In the case where a person becomes silent in the scene with no camera, because the cut point of the video is not generated but a silent section is generated, there is a boundary between temporary meta shots.

### (2) Description of redefinition of temporary meta shots

When 701 and 702 are mismatched as shown in Fig. 7, the boundary candidate time correcting unit 106 performs redefinition of temporary meta shots by a prescribed method of the following methods.

The first method is a method of enabling only the temporary meta shot boundaries input from the meta shot boundary candidate time input unit 109 and discarding the cut points (boundaries) detected by the cut detecting unit 102. In this case, in Fig. 7, 701 is enabled and 702 is discarded.

The second method is a method of searching for the closest ones from the temporary meta shot boundaries input from the meta shot boundary candidate time input unit 109 of the cut points detected by the cut detecting unit 102, and changing the temporary meta shot boundaries to the positions of the search results. In this case, in Fig. 7, 701 is discarded and 702 is enabled.

The third method is a method of setting both temporary meta shot boundaries input from the meta shot boundary candidate time input unit 109 and the cut points detected by the cut detecting unit 102 as new meta shot boundaries. In this case, in Fig. 7, both 701 and 702 are enabled, and the section between the 701 and 702 becomes a short shot and short meta shot.

### (3) Another description of redefinition of temporary meta shots

The above three methods will be described from another point of view using Fig. 8.

Fig. 8 is a conceptual diagram for showing the action of the boundary candidate time correcting unit 106 in the moving image processing apparatus 10.

In Fig. 8, the rectangle in the stage A represents a shot defined by the shot section defining unit 103. On the other hand, 801 is a temporary meta shot boundary inputted from the meta shot boundary candidate input unit 9.

The three methods that have been described using Fig. 7 correspond to B, C, and D, respectively. Thus, the boundary candidate time correcting unit 106 redefines the boundaries of temporary meta shots, and the meta shot generating unit 107 generates meta shots using the results therefrom. The subsequent process is the same as in the embodiment 1.

### (4) Moving image processing

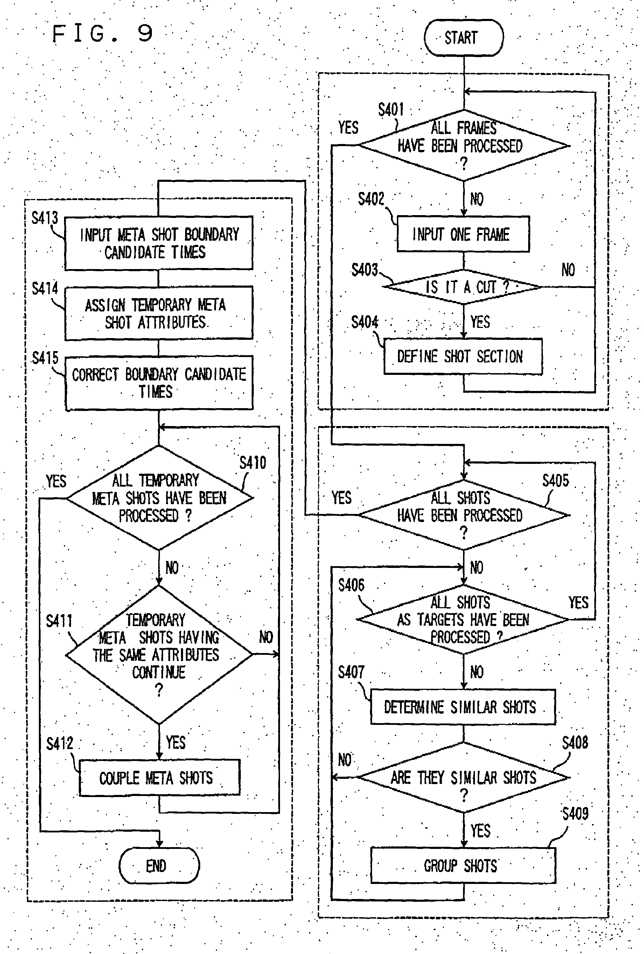

Fig. 9 is a flowchart showing moving image processing in the moving image processing apparatus 10.

Since there are many common and duplicated steps with the parts that have been described in the embodiment 1 using Fig. 4, the common and duplicated parts are omitted and the parts different from those in the embodiment 1 will be' described.

The process to the point where the temporary meta shot attribute assigning unit 105 assigns the same attribute labels to the plural temporary meta shots in which similar shots having the same labels exist based on the labels (attributes) assigned by the similar shot detecting unit 104 (step S414) is the same as in the embodiment 1.

Here, the boundary candidate time correcting unit 106 redefines the temporary meta shot boundaries using the above described method (step S415).

The processing after the meta shot generating unit 107 couples the temporary meta shots using the attribute labels assigned to the temporary meta shots as described above with reference to whether they are continuous temporary meta shots and have the same attribute labels (or whether they have attribute labels or not) (step S411) to form meta shots (S412) is the same as in the embodiment 1.

As described above, since the moving image processing apparatus 10 according to the embodiment 2 couples temporary meta shots based on appearance patterns of similar shots, the temporary meta shots excessively detected can be efficiently coupled. Further, as attributes of meta shots, whether they contain similar shots (they are program main parts) or not (they are commercials) or the like can be automatically estimated. Thereby, the retrieval of predetermined scenes can be made easier for users.

### (5) Modified example, of moving image processing.

The moving image processing in the moving image processing apparatus 10 is formed by three processings (parts surrounded by broken lines in Fig. 4) of (1) shot section definition processing, (2) grouping processing, and (3) meta shot generation processing.

In the embodiment, after (1) shot section definition processing is completed with respect to all shots contained in the moving image, the process moves to (2) grouping processing. Similarly, after (2) grouping processing is completed with respect to all shots contained in the moving image, the process moves to (3) meta shot generation processing. Instead, as another example, the above three processings may be executed in parallel while inputting video by providing a temporary storage area (not shown) in the moving image processing apparatus 10.

For example, each time a new cut is detected and a shot section is defined, similar shot determination may be performed with respect to the shot section and a shot section of the past, and meta shot generation for the moment may be performed based on the similar shot determination results that have been obtained and the meta shot boundary candidate time information externally input. Thus, by executing processings in parallel, processing result can be obtained in extremely short time after the program recording is ended.

### (6) Hardware configuration of moving image processing apparatus 10

As well as in the embodiment 1, Fig. 5 shows a hardware configuration of the moving image processing apparatus 10.

The moving image processing apparatus 10 includes as the hardware configuration a ROM 52 in which programs for executing the moving image processing or the like in the moving image processing apparatus 10 have been stored, a CPU 51 for controlling the respective units of the moving image processing apparatus 10 according to the programs within the ROM 52 to execute the moving image processing or the like, a RAM 53 in which a work area has been formed and various data required for control of the moving image processing apparatus 10 have been stored, a communication I/F 57 connecting to a network to perform communication, and a bus 62 for connecting the respective parts.

The moving image processing program for executing the moving image processing in the above described moving image processing apparatus 10 is provided by being recorded in a computer-readable recording medium such as a CD-ROM, flexible disk (FD), and DVD in files of an installable format or executable format.

Further, the moving image processing program of the embodiment may be arranged to be provided by being stored in a computer connected to a network such as Internet, and downloaded via the network.

In this case, the moving image processing program is loaded on a main storage by being read from the above recoding medium and executed in the moving image processing apparatus 10, and the respective parts that have been described in the software configuration are generated on the main storage.

### [Embodiment 3]

Next, a moving image processing apparatus 10 according to the embodiment 3 will be described.

All of the functional configuration, processing flow, apparatus configuration of the embodiment will be omitted because they are the same as in the above described embodiment 1 or embodiment 2.

### (1) Regarding possibility of erroneous attribute assignment

First, problems that the embodiment 3 is to solve will be described.

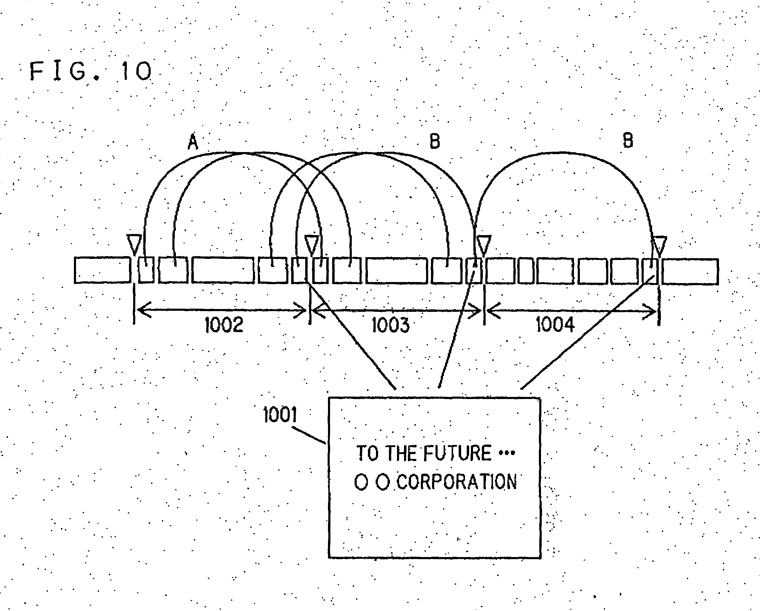

Fig. 10 is a conceptual diagram showing the expansion of procedures when the temporary meta shot attribute assigning unit 105 of the moving image processing apparatus 10 assigns attributes to temporary meta shots utilizing the results of the similar shot detecting unit 104.

The rectangle in Fig. 10 represents a shot and the inverted triangle represents a boundary between commercials. The parts connected by curved lines above the rectangles represent that they are similar shots, respectively.

The respective sections 1002, 1003, and 1004 are commercials of the same company. Further, the sections 1002 and 1003 are commercials of the same product, and have the same cuts except that only the intermediate shot is different.

In such a case, an image 1001 representing a logo of the company is often displayed at the end of the commercial, and these are detected as similar shots in the similar shot detecting unit 104. However, when the sections 1002, 1003, and 1004 are temporary meta shots that have been externally defined, if the temporary meta shot attribute assigning unit 105 assigns the same meta shot patterns (attributes) using these without change, a problem that the same attribute assignment as for the program main parts is performed arises.

Further, the same problem may occur in the case where completely the same commercial is broadcasted twice in a row, or a series commercials having partial differences are broadcasted, because the similar shot across the meta shots exists.

### (2) Solution'

Accordingly, when the similar shot exists between temporary meta shots, the temporary meta shot attribute assigning unit 105 calculates the relative positions thereof and determines whether they are used for attribute assignment or not.

For example, assuming that, regarding both of the pair A of similar shots in Fig. 10, the start time is at the head (0 second) of the meta shot and the end time is in 2.5 second later from the head of the meta shot, although they are the similar shots but determined that the relative positions in the meta shots are strictly matched, and the pair (A) of similar shots is not utilized as the ground of assignment of the same meta shot pattern (attribute).

Specifically, regarding a pair of similar shots as a comparison target, conditions such that "the start times measured from the head in the temporary meta shots match within a margin of error of 0.5 seconds" and "the end times measured from the head in the temporary meta shots match within a margin of error of 0.5 seconds" are used. By the method, pairs B of similar shots of the company logo or the like can be eliminated.

### (3) Modified example 1 of solution

In the above description, the determination whether the similar shot is eliminated from the ground of meta shot pattern (attribute) assignment is performed using the relative positions from the heads of the meta shots, however, the company logo or the like in the commercials having different time lengths can be'correctly eliminated by expanding the method as below.

For example, the case where sometimes a 15-second commercial and a 30-second commercial are broadcasted though they are the same company's, and 1-second company logo is inserted at the end of the commercials is considered. In order to deal with such a case, the condition that the pair of similar shots are not used as the ground of meta shot pattern (attribute) assignment is added to the condition "the start times measured from the head in the temporary meta shots matches within a margin of error of 0.5 seconds" and "the end times measured from the head in the temporary meta shots matches within a margin of error of 0.5 seconds" uses as above.

### (4) Modified example 2 of solution

Further, in the above description, the condition that both of the start times and end times of the similar shots as targets match is set, however, only using either single condition that the target similar shots "start from the heads of the meta shots" or that the target similar shots "end at the ends of the meta shots", the same meta shot pattern (attribute) can be prevented to be assigned across the plural commercials by the similar shot detection of the company logo or the like.

### (5) Modified example 3 of solution

In addition, sometimes the same commercials or the same company commercials are broadcasted at separated times in the same program, when the similar shots are detected from the commercials at separated times, it is possible that the same attribute assignment as for the program main parts is performed. To prevent this, a similar shot search range may be prescribed in the similar shot detecting unit 104.

For example, when the condition that "similar shot search is performed within 10 minutes' range" has been set in advance, the similar shots temporally separated more than 10 minutes are not detected. That is, in the case where a program main part more than 10 minutes exists between a commercial and the next commercial, even if the same commercial is broadcasted in the commercial sections at both sides, because the similar shots are not detected in the first place and there is no ground of meta shot pattern (attribute) assignment, the possibility that commercials can be correctly discriminated from program main parts becomes higher.

### (6) Modified example 4 of solution

Further, in the above description, the similar shot detection within the same moving image has been described as an example, however, the processing can be performed using a moving image formed by recording the same program at plural times.

In this case, even in the case where, although a program is formed by five corners, for example, because title images of the respective corners are different, the corner titles are not detected as similar shots only by the moving image broadcasted once, when the similar shot detection is performed using recording data of the same program at plural times, the corner titles are the similar shots across the times of broadcasting and meta shot pattern (attribute) assignment can be performed on the temporary meta shots, and thereby, it is possible that the discrimination capability between program main parts and commercials is improved.

Note that the invention is not limited to the above respective embodiments, but various changes can be made without departing from the scope of the invention.

### INDUSTRIAL APPLICABILITY

As described above, the invention is useful for generating meta shots, and specifically, suitable for assigning attributes (program main parts or commercials) to the meta shots.

## Claims

1. A moving image processing apparatus for classifying meta shots as sets of single partial moving images or plural partial moving images divided at image change points where contents of a moving image are changed over into meta shots having the same attributes, the moving image processing apparatus comprising:
a degree of similarity measurement processing unit for measuring degrees of similarity between plural partial moving images divided at image change points where contents of a moving image are changed over;
a similar shot specification processing unit for specifying partial moving images similar to each other based on the measured degrees of similarity;
a grouping processing unit for assigning the same group attributes to the specified similar partial moving images;'
a meta shot boundary candidate time input processing unit for externally receiving input of times within the moving image that can be boundary candidates of the meta shots and dividing the moving image into temporary meta shots as plural sections by the received meta shot boundary candidate times; and
a temporary meta shot attribute assignment processing unit for assigning the same attributes to the divided temporary meta shots containing partial moving images to which the same group attributes have been assigned.

2. The moving image processing apparatus according to claim 1, further comprising a meta shot generation processing unit for coupling plural temporary meta shots temporally continuing and having the same attributes to generate one meta shot based on the attributes assigned by the temporary meta shot attribute assignment processing unit or, when meta shots having the same attribute do not continue, generating a single meta shot itself as one meta shot.

3. The moving image processing apparatus according to claim 1 or 2, further comprising a boundary candidate time correction processing unit, in the case where there are time shifts between the meta shot boundary candidate times input by the meta shot' boundary candidate time input processing unit and division times of the partial moving images divided at image change points where contents of the moving image are changed over, for defining new temporary meta shot boundaries with reference to the meta shot boundary candidate times or the image change points,
wherein the meta shot generation processing unit generates meta shots based on the defined new temporary meta shot boundaries.

4. The moving image processing apparatus according to any one of claims 1 to 3, wherein the meta shot boundary candidate times received by the meta shot boundary candidate time input processing unit are time information generated by operation by a user.

5. The moving image processing apparatus according to any one of claims 1 to 3, wherein the meta shot boundary candidate times received by the meta shot boundary candidate time input processing unit are one piece or plural pieces of time information at heads, intermediates, and ends of time sections in which sound levels are equal to or less than a fixed value over a fixed period within the moving image.

6. The moving image processing apparatus according to any one of claims 1 to 3, wherein the meta shot boundary candidate times received by the meta shot boundary candidate time input processing unit are time information at which transmission formats of sound are switched within the moving image.

7. The moving image processing apparatus according to any one of claims 1 to 3, wherein the meta shot boundary candidate times received by the meta shot boundary candidate time input processing unit are time information at which transmission formats of moving image are switched within the moving image.

8. The moving image processing apparatus according to any one of claims 1 to 3, wherein the meta shot boundary candidate times received by the meta shot boundary candidate time input processing unit are time information selected among image change points where contents of the moving image are changed over on condition that intervals of the image change points are fixed times.

9. The moving image processing apparatus according to any one of claims 1 to 8, wherein, when assigning the same attributes to the meta temporary shots, with respect to start times or end times or both times of two partial moving images belonging to different meta shots belonging to the same groups, the temporary meta shot attribute assignment processing unit assigns or does not assign the same attributes to the respective temporary meta shots when the relative times in the respective temporary meta shots are matched or close.

10. The moving image processing apparatus according to any one of claims 1 to 9, wherein the partial moving images with respect to which the degree of similarity measurement processing unit measures degrees of similarity, and the similar shot specification processing unit specifies as similar are partial moving images of plural different moving images.

11. A moving image processing method for classifying meta shots as sets of single partial moving images or plural partial moving images divided at image change points where contents of a moving image are changed over into meta shots having the same attributes, the moving image processing method comprising:
a cut detection step of detecting image change points where contents of images are changed over from a moving image;
a degree of similarity measurement step of measuring degrees of similarity between plural partial moving images divided at the detected image change points;
a similar shot specification step of specifying partial moving images similar to each other based on the measured degrees of similarity;
a grouping step of assigning the same group attributes to the specified similar partial moving images;
a meta shot boundary candidate time input step of externally receiving input of times within the moving image that can be boundary candidates of the meta shots and dividing the moving image into temporary meta shots as plural sections by the received meta shot boundary candidate times; and
a temporary meta shot attribute assignment step for assigning the same attributes to the divided temporary meta shots containing partial moving images to which the same group attributes have been assigned to classify the plural partial moving images into temporary meta shots having the same attributes.

12. A program for realizing by a computer a moving image processing method for classifying meta shots as sets of single partial moving images or plural partial moving images divided at image change points where contents of a moving image are changed over into meta shots having the same attributes, the program of the moving image processing method comprising:
a cut detection function of detecting image change points where contents of images are changed over from a moving image;
a'degree of similarity measurement function of measuring degrees of similarity between plural partial moving images divided at the detected image change points;
a similar shot specification function of specifying partial moving images similar to each other based on the measured degrees of similarity;
a grouping function of assigning the same group attributes to the specified similar partial moving images;
a meta shot boundary candidate time input function of externally receiving input of times within the moving image that can be boundary candidates of the meta shots and dividing the moving image into temporary meta shots as plural sections by the received meta shot boundary candidate times; and
a temporary meta shot attribute assignment function for assigning the same attributes to the divided temporary meta shots containing partial moving images to which the same group attributes have been assigned to classify the plural partial moving images into temporary meta shots having the same attributes.
